Europäisches Patentamt

European Patent Office

Office européen des brevets

(11) Publication number: **0 084 438**
**B1**

(12) EUROPEAN PATENT SPECIFICATION

(45) Date of publication of patent specification: **18.03.87**

(21) Application number: **83300167.0**

(22) Date of filing: **13.01.83**

(51) Int. Cl.⁴: **C 03 B 19/00,** C 03 C 3/06,
C 04 B 35/14

(54) Method of forming glass or ceramic article.

(30) Priority: **15.01.82 US 339395**

(43) Date of publication of application:
**27.07.83 Bulletin 83/30**

(45) Publication of the grant of the patent:
**18.03.87 Bulletin 87/12**

(84) Designated Contracting States:
**AT BE DE FR GB IT NL**

(56) References cited:
**US-A-4 047 966**
**US-A-4 126 422**

(73) Proprietor: **Corning Glass Works
Houghton Park
Corning New York 14831 (US)**

(72) Inventor: **Scherer, George Walter
107 Woodland Drive
Big Flats New York (US)**

(74) Representative: **Boon, Graham Anthony et al
Elkington and Fife High Holborn House
52/54 High Holborn
London, WC1V 6SH (GB)**

Courier Press, Leamington Spa, England.

## Description

The present invention relates to a method for making pure, homogeneous porous glass or ceramic bodies from particulate oxide materials such as fumed metal oxides. The porous bodies may be consolidated into dense, void-free glass or ceramic products.

The concept of making glass products at reduced temperatures by sintering a mass of glass particles is old. A number of methods for producing the mass have been considered, including slip casting, compaction, sedimentation and polymerization or condensation from solutions.

Perhaps the most common methods are the solution methods wherein solutions or suspensions of glass-forming constituents are treated to form a precipitate, polymerization product, or gel which is then dried and sintered to form glass. U.S. Patents Nos. 3,535,890, 3,678,144 and 4,112,032 describe one such approach to glass-forming wherein aqueous silicate solutions or suspensions are gelled, dried and fired to produce glasses. Disadvantages of such approaches include the need for a very prolonged and difficult drying process, and only limited product purity due to the presence of iron and other metallic impurities in the starting material. Drying treatments requiring days, weeks or months for completion are not uncommon.

Higher purity can be attained through the use of starting materials such as silicon alkoxides in the precipitating solutions, as noted in G.B. Patent No. 2,041,913 disclosing an adaptation of such a process to the manufacture of glass optical waveguides. Again, however, the drying step is difficult and prolonged.

Slip-casting methods have long been used to produce ceramic products from particulate oxide materials, and much of the published literature deals with the technology of producing a satisfactory slip. For example, U.S. Patent 2,942,991 teaches the stabilization of an aqueous casting slip while S. G. Whiteway et al., in "Slip Casting Magnesia", *Ceramic Bulletin*, 40 (7) pages 432—438 (1961) discuss the advantages of non-aqueous slips. In contrast to the solution methods discussed above, vehicle removal in slip-casting is relatively quick and easy, due in part to the relatively large particle sizes of the suspended oxides. Hence gelation is easily avoided and the problem of gel fragility and cracking are not encountered although product configuration is somewhat limited.

Attempts to adapt slip casting technology to the handling of high-purity fumed oxides have been made, as reported in U.S. Patents Nos. 4,042,361 and 4,200,445. The difficulty with fumed oxides arises in part because they are fluffy, high-surface-area materials (surface areas in the range of 25—400 $m^2/g$ with average particle sizes below 1 $\mu$m, typically 0.01—0.1 microns) which are hard to handle and difficult to incorporate into flowable suspensions. In addition, the cast suspensions typically crack on drying in the same manner as the solution-made gels. Thus, the teachings of the aforementioned two patents is to use aqueous suspensions of fumed oxides to prepare a partially sintered, comminuted intermediate (particle sizes of 1—10 $\mu$m) for use as a starting material in a conventional slip casting process.

It is proposed in G.B. 2,023,571 to deposit oxide glasses of controlled composition by drying and sintering oxides from fluid suspensions on the inside of a heated silica tube. While this technique could be used to produce a composition gradient in the deposited glass, the rate of material deposition is slower than would be desired, adherent, crack-free layers are difficult to obtain, and the method somewhat limits the configuration of the product.

It is an object of the present invention to provide an improved method for making glass or ceramic products from fumed oxides by sintering methods.

It is another object of the invention to provide a method for making a glass product of optical quality by a relatively rapid procedure which facilitates the production of pure, void-free products from a particulate suspension of oxides.

The present invention uses stable particulate suspensions of oxides as starting materials for producing glass or ceramic products from gels, the suspensions being so constituted as to substantially simplify subsequent processing and to improve the properties of the resulting products. Although the gels provided from these suspensions must be dried under controlled conditions, drying is relatively rapid and relatively large, crack-free, porous products exhibiting excellent homogeneity are easily obtained. The porous products can readily be sintered to produce dense, void-free glass or ceramic articles.

Advantageously, no composition limitations on the end product are imposed by the nature of the starting suspensions. Substantially any oxidic material such as a fumed oxide produced by flame oxidation or hydrolysis in an appropriate particle size range, or an oxide otherwise made in an agglomeration state ensuring sufficiently small particle size, can be used.

The method of the invention broadly encompasses four fundamental steps. First, a stable, flowable, non-aqueous suspension of a fumed oxide or equivalent particulate oxidic material is prepared using oxides having average particle sizes not exceeding about 0.5 microns. The oxides can be prepared by flame oxidation and will normally have a surface area in the range of about 25—400 $m^2/g$. The suspension can be prepared by stirring, high-speed mixing, wet-milling or the like and may be stabilized using added dispersants if necessary to prevent gelling or particle agglomeration and settling.

The use of a non-aqueous liquid vehicle and, preferably, a water-free oxide, are quite important. The presence of water can cause uncontrollable gelation of the suspension. Also, the exclusion of water from the vehicle greatly alleviates preform cracking problems during subsequent processing.

The second step of the process of the invention is to destabilize the suspension so that it will ultimately form a gel. This is preferably accomplished by adding a gelling agent to the suspension in an amount effective to cause complete gelation. As with prior art silicate solutions, this can usually be done without promoting immediate gelation, which in the case of the present process is essential for subsequent processing.

After the suspension has been destabilized, but prior to gelation, it is formed into a selected configuration for a product, and maintained in that configuration at least until the suspension has gelled. Preferably the configuration is maintained until the gelled suspension has dried as hereinafter described, to minimize the possibility of gel distortion and cracking. Casting is normally the preferred technique for forming the suspension into the desired configuration since the viscosity of the suspension, notwithstanding a rather high solids content, is normally low.

Finally the gelled suspension having the configuration of the desired product, is dried by expelling the liquid vehicle from the pore structure thereof. By virtue of the homogeneity and relatively large pore size of the gelled material, and because the vehicle is essentially non-aqueous, drying stresses are minimized and drying can be relatively rapid without risking product cracking.

The product resulting from the above-described process is typically very homogeneous in microstructure. It can be used as dried or after partial sintering for any application wherein a pure, microporous support structure, filter, or the like is desired. Alternatively, an additional heating step wherein the product is fully sintered to a dense, void-free glass or ceramic product can be employed. The particle sizes in the dried gel are sufficiently small that sintering is easy, and a transparent glass product is readily obtained.

Gelation of the stable non-aqueous suspensions of the invention can be very rapid, e.g. occurring almost immediately after forming, without detrimentally affecting the pore homogeneity or shape of the fired product. This feature makes the present process particularly useful for layer casting, wherein a product is built up by a succession of cast layers, each layer being cast upon a previously cast underlayer which has gelled sufficiently to provide a good support for the subsequently applied layers within a very short time.

Rapid gelation enhances the feasibility of designing composition gradients into layer-cast products by facilitating the forming of many layers of slightly varying composition in the product structure. One useful way to implement such a procedure is to mix the starting suspension, here termed the first suspension, with at least one additional suspension containing a particulate oxide of a different composition than that contained in the first suspension.

The proportions of each suspension in the mixture are varied in stepwise or continuous fashion as the layers are deposited, to obtain a selected oxide composition in each deposited layer. Mixing can occur before or after gelling agents have been added to one or both of the suspensions, provided that forming can take place before gelling occurs. In this way radial or axial composition gradients can readily be obtained.

The invention may be further understood by reference to the accompanying drawings, wherein:

FIG. 1 is a plot of setting time versus concentration for a particular gelling agent/suspension combination useful in accordance with the invention; and

FIG. 2 is a porosimetry curve for a product provided in accordance with the present invention.

The successful practice of the invention initially requires the preparation of a stable fluid dispersion of the oxide particles selected for incorporation into the desired product. By a stable dispersion is meant one wherein the particles will remain in suspension without permanent agglomeration or gelling for a time sufficient to permit the suspension to be shaped by casting or other means. Of course, some settling is permitted if the suspension can readily be established by simple mixing prior to shaping.

Particulate oxidic materials which can be used in preparing the suspensions include glassy or amorphous fumed oxides, e.g. fumed $SiO_2$, $GeO_2$, $P_2O_5$, mixtures of these fumed oxides with each other or with dopants such as $TiO_2$, $Al_2O_3$, and any other fumed oxide or oxide combination which can be prepared by flame oxidation or hydrolysis to form a glassy soot product of the required particle size. In some cases, the product of the invention will be a crystalline ceramic body, and in that case, the particulate oxidic material may be crystalline as incorporated into the suspension. Examples of crystalline materials which may be used include $Al_2O_3$, $TiO_2$, $ZrO_2$, $SnO_2$, and any of the other constituents of conventional or commercial ceramic products which can be prepared in the necessary particle size range.

As previously noted, oxide particle size is quite important. It is preferred that particle sizes for the selected oxides fall within the range of about 0.01—0.1 microns, corresponding to a surface area for a sample of the material in the range of about 15—100 $m^2/g$. If smaller particle sizes are used, the drying process is complicated, in some cases requiring resort to autoclave drying at temperatures above the critical point of the vehicle to achieve useful drying rates without cracking.

Although many techniques have been developed for the production of sub-micron-size oxidic particles, the preferred method is flame oxidation or hydrolysis because the fumed products of this method commonly exhibit the necessary particle size and surface area as made. For example, fumed silica particles are typically agglomerates of tiny silica spheres, having the appearance of grape clusters, but the agglomerates seldom exceed 0.5 microns in size and readily form stable colloidal suspensions in appropriate vehicle-dispersant systems.

The use of fumed oxides may be distinguished from prior art methods such as the so-called sol-gel method wherein ceramic products are produced from gels wherein the oxidic material is polymerized or precipitated from within an aqueous or water-alcohol solution. With few exceptions, solution-grown oxidic materials have sufficiently small particle sizes that gels with very small pores are produced. Gels of this type dry extremely slowly and are very difficult to dry and consolidate without cracking, for reasons more fully described below.

A variety of different ways for providing suspensions of oxide materials in liquid vehicles are known, both from the paint industry and from fundamental research in colloid chemistry. The known mechanisms for stabilizing dispersions by the prevention of particle agglomeration in the vehicle include electrical double layer formation, steric dispersion, and polar screening. The present invention requires the use of a non-aqueous vehicle, most frequently a hydrophobic organic liquid, wherein the preferred method for stabilizing the suspension is that of steric dispersion. In dispersions of this type, the complete absence of water, including water adsorbed onto the particulate oxide added to the suspension, is very desirable since even trace amounts of water can interfere with the stabilization mechanism and promote flocculation of the particles and gelling of the suspension. In fact, water can constitute a useful flocculating or gelling agent in these systems.

To stabilize the dispersion by steric hindrance, a dispersing agent is added to the suspension, typically consisting of a chain-like molecule comprising both hydrophilic and hydrophobic groups. The hydrophilic group, e.g., an —OH or —COOH group, is attracted to and capable of adsorbing on the hydrophilic oxide particles present in the suspension. The hydrophobic group can be a carbon chain or the like which is attracted to the organic vehicle and capable of preventing agglomeration of the particulate phase by steric hindrance.

Stabilization by the technique of steric dispersion is particularly useful because the dispersant layers on the particles are thin, so that rather highly concentrated but stable suspensions may be prepared. Of course, other stabilization techniques including electrical double layer and polar screen methods may be employed, provided stable fluid dispersions capable of flocculation with a compatible gelling agent can be prepared therefrom.

Examples of vehicles which can be used with oxidic particulates such as silica and silicate glasses include hydrophobic solvents such as n-hexane, chloroform, methylene chloride or the like, and also some vehicles which are miscible with water, e.g., n-propanol. Examples of dispersants which can be used in solvents such as above described include stearic acid, stearic alcohol, and even shorter straight-chain alcohols, liquid at room temperature, such as the normal alcohols with carbon chains of 3—10 atoms.

Flocculation or gellation of a steric dispersion produced as above described is thought to involve the displacement of the dispersant from the surfaces of the oxide particles by constituents having a stronger affinity therefore than the dispersant. As already noted, water is one agent which can accomplish this result, although water deflocculation and gellation is a rather slow process, in cases where the attachment of a dispersant to the oxide particles is strong. More rapid flocculation and gellation in these cases can be achieved by adding small amounts of aqueous acidic or basic solutions to the suspension, with basic solutions being preferred. Basic media can cause rather rapid gellation at low concentrations in the vehicles tried, whereas rather strong acid solutions are required.

In general, the gelling agent used to destabilize the suspension can simply be added to the suspension in liquid form with mixing to achieve dispersion. Again, however it is difficult to obtain a homogeneous dispersion of aqueous solutions where highly hydrophobic vehicles such as chloroform are employed. One satisfactory technique to aid homogeneous gelling is to mix the aqueous gelling agent with a quantity of vehicle-miscible liquid such as methanol, and to then add the combination to the suspension. This does not diminish the potency of the aqueous gelling agent in most cases.

A preferred destabilizing technique for some applications, particularly in the case of a very hydrophobic vehicle such as chloroform, is to use a vehicle-miscible or vehicle-soluble gelling agent. A preferred class of gelling agent of this type includes the alkyl amine gelling agents, for example, heptylamine or 1,3-diamino propane. The quantity of those gelling agents needed for complete gelation is very small, and the superior miscibility of the gelling agent in the suspension produces a gel of significantly improved homogeneity.

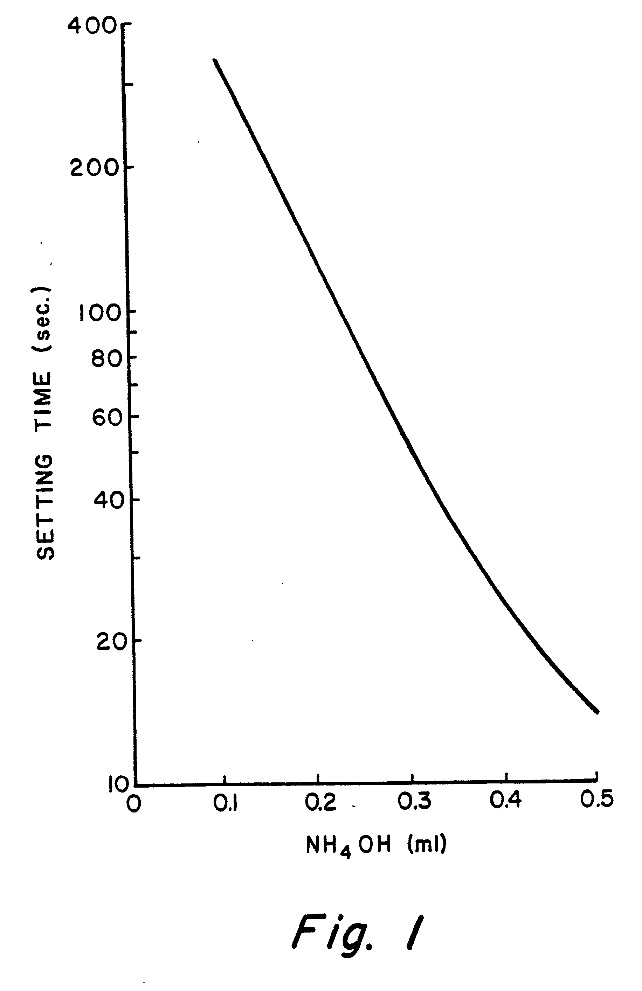

It is desirable to cast or otherwise form the unstable suspension before gellation has been substantially initiated, and for this purpose it is useful to control gelling time by controlling the amount of gelling agent introduced into the suspension. An example of the effect of gelling agent concentration on setting time is shown in FIG. 1 of the drawing, which plots setting time in seconds for a suspension of $SiO_2$ in chloroform stabilized with 1-decanol as a function of the concentration of an $NH_4OH$ gelling agent introduced therein. The gelling solution for the case illustrated consisted of 95 ml methanol, 5 ml water, and 0.2—0.6 ml of 30% aqueous $NH_4OH$ as the gelling agent, the gelling solution being combined with the suspension in a volume ratio of 1 to 3. The strong effect of $NH_4OH$ concentration on setting time, defined as the time interval between the addition of the gelling agent and the time when a sample of the gelling suspension no longer flowed from an inverted test tube, is readily apparent.

After the gelling agent has been added to the suspension, but prior to gellation, the suspension must be formed into an intermediate having a selected configuration for the desired end product. Typically the fluidity of the suspension at this point is sufficiently high that casting usually constitutes the most convenient method for forming the product.

Because the gelled intermediate produced within a short interval after casting is relatively weak and subject to cracking in the course of the shrinkage which will accompany the removal of the liquid phase, it has been found very helpful to cast the suspension onto a surface which will deform with the intermediate as it shrinks during drying. One suitable technique for accomplishing this is to line the casting mould with a deformable polymeric layer, such as a thin plastic film, which will adhere to and deform with the intermediate as it shrinks during the early stages of drying. This film can then be conveniently removed after the intermediate has attained sufficient strength in the course of the drying process.

The gelling process, although avoided in certain prior solution methods for forming glasses, is considered a critical aspect of the present invention because it prevents deformation and cracking of the cast suspension during the drying period. As noted in the prior art, even fumed oxide suspensions, if cast without gelling, tend to dry at the outer surfaces thereof, forming a skin which deforms and/or cracks during the ensuing slow drying and shrinkage of the interior:

On the other hand, the strongly gelled structure of the invention does not form a skin but dries uniformly with transport of the liquid vehicle from the interior to the outer surface on a continuous basis as the intermediate is dried. In this way, inhomogeneous drying and non-uniform stress on the drying microporous product is minimized.

The use of a non-aqueous vehicle and control over the particle size or surface area of the suspended particulate oxidic material are particularly important factors during the drying stage of the present process. After a large part of the vehicle has been expelled from the gel and most of the drying shrinkage has occurred, large forces arise in the gel due to capillary tension which develops as the vehicle is replaced by air in the pore structure of the gel. This capillary tension, inversely proportional to the pore size of the gel, is also directly proportional to the surface tension of the vehicle, which in the case of selected organic vehicles can be substantially less than that of water. Thus, the use of an organic vehicle in combination with particle size control over the dispersed oxide permits drying of the gelled material without the formation of cracks in a reasonable period of time.

Sintering of the dried porous glass or ceramic product body can be conveniently accomplished by heating at temperatures well below the melting points of the oxides employed. By virtue of the pore homogeneity of the dried product, resulting from controlled gellation and the avoidance of overly large agglomerates during the suspension step of the process, void-free consolidation is readily accomplished and transparent amorphous products, and even transparent crystalline products, are possible. Thus the production of glass and ceramic products at temperatures well below the melting temperatures of their oxide constituents is considerably facilitated.

The invention may be further understood by reference to the following illustrative examples demonstrating the production of ceramic products in accordance therewith.

Example I

A particulate oxidic material consisting of a $SiO_2$ soot is prepared by flame hydrolysis. An oxygen carrier gas is bubbled at a rate of 1.55 standard liters per minute (slpm) through a reservoir of $SiCl_4$ maintained at 36°C. The resulting $O_2$—$SiCl_4$ vapour stream is fed to a flame oxidation burner of the type described in U.S. Patent No. 4,165,223, along with natural gas and oxygen for the burner flame at flow rates of 2.5 slpm, and 2.5 slpm, respectively. An inner shield oxygen flow of 2.5 slpm and an outer shield oxygen flow of 3.8 slpm are also provided to the burner as described in the patent.

The soot resulting from the combustion of the chloride gases in the burner under the conditions described is directed down a glass tube where it collects on the wall of the tube for subsequent removal. As prepared, this soot has several weight percent of adsorbed $H_2O$ and HCl. To remove these contaminants and obtain a pure dry oxidic product, the soot is heated to about 800°C in flowing dry $N_2$ for a period of about one hour. The product is a dry $SiO_2$ soot having a surface area of about 76 $m^2/g$, or a particle size averaging about 0.04 microns.

In order to prepare a stable dispersion, a soot produced as described is first dried at 200°C to remove any adsorbed water collected in storage. It is then placed in a dry environment, for example a glove box, to keep it dry until use.

A chloroform vehicle is purified by distillation and a 1-decanol dispersant is dried by filtering through a molecular sieve. The vehicle for the suspension is then prepared by adding 14.4 ml of 1-decanol to 150 ml of the chloroform solvent with mixing.

The vehicle thus prepared is transferred into the glove box and a 60 g sample of the dry soot is mixed with the vehicle in a Teflon (Registered Trade Mark) plastic milling jar, to which are also added a number of Teflon cylinders for mixing. The plastic jar is then capped, removed from the glove box, and the mixture ball-milled by rotating the jar for twelve hours to obtain a good dispersion of the soot in the vehicle. The product is a stable dispersion of $SiO_2$ in chloroform, exhibiting good fluidity and excellent resistance to flocculation and settling.

The gelling agent to be used to gel this suspension is a water-methanol mixture comprising 95 ml $CH_3OH$ and 5 ml $H_2O$ by volume to which is added 0.5 ml of 30% aqueous $NH_4OH$ as the principal gellant. To obtain good mixing of the gelling agent and the suspension, each is loaded into a separate graduated funnel and exposed to a partial vacuum (20 inches of mercury or 0.68 bars) for about 5 minutes. This treatment removes dissolved gas from the liquids and minimizes bubble evolution in the course of mixing.

The suspension and gelling agent are separately delivered into a mixing chamber containing a magnetic stirring element, at a ratio of 3 parts of suspension to 1 part of gelling agent by volume. The suspension/gelling agent mixture is then dispensed from the mixing chamber into a plastic-lined mould.

The mould employed is a rectangular container about 62 × 75 mm in area in which is placed a sheet of 2-mil (0.05 mm) polyethylene film as a flexible liner. The suspension and gelling agent fill this mould to form a mass of the same area about 10 mm in thickness. Gellation of this casting to a nonflowable mass ocurrs within an interval of about 2 minutes after casting.

The gelled intermediate thus provided is dried at a suitable rate to a porous solid. Drying is carried out in a circular vented glass evaporation chamber about 300 mm in diameter which incorporates vent holes having a total surface area of about 80 mm². This venting controls the evaporation rate of the liquid vehicle and ensures that cracking will not occur. Crack-free drying occurs over a period of about 72 hours at room temperature, with shrinkage of about 25% (linear) in the dimensions of the product.

The dried gel is exposed to vacuum for a few hours and then heated to 800°C in oxygen to remove residual organic constituents therefrom. A heating rate of about 50°C/hr is used, although much faster heating rates can be employed. No structural change in the porous intermediate is detectable during this drying process.

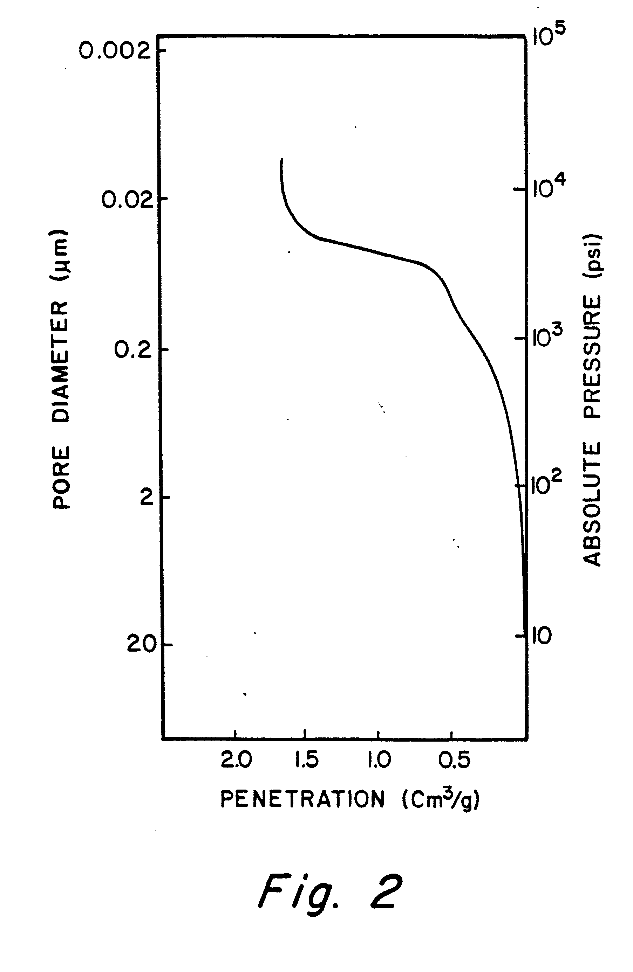

Mercury penetration porosimetry of the dried gel indicates a porosity of about 65%, with the pore size showing a bimodal distribution. The structure comprises one group of pores near 400 nm in diameter and another group in the 200—300 nm diameter range. A typical porosimetry curve for such a product is shown in FIG. 2 of the drawing. Such a product could be used, for example, as a catalyst or enzyme support, as a filter, or for any other article wherein homogeneous porosity is desired.

Sintering of the dried porous product is suitably accomplished in an inert atmosphere, e.g. a helium atmosphere, and full consolidation can be achieved within an interval of less than 30 minutes at 1350°C. Shrinkage during this step of the process is typically about 40% (linear), the product being an essentially clear glass plate of very pure $SiO_2$ about 28 × 34 mm in size, containing only a few small scattered seed defects.

### Example II

In an alternative and preferred gelling procedure, the stabilized silica-chloroform suspension of Example I is destabilized and gelled using a vehicle-miscible alkyl amine gelling agent. The selected gelling agent, heptylamine, is added to a chloroform vehicle for the purpose of dilution, the final concentration of the amine in the chloroform gelling solution being 600 parts per million by volume. This solution is combined with a silica-chloroform suspension of the type described in Example I in the stirred mixing chamber of that example in a volume ratio of 3 parts suspension to 1 part of the gelling solution.

The destabilized suspension thus prepared may be cast as in Example I, and will gel in the casting mould within about 4 minutes. The resulting gel may be dried and consolidated in accordance with the procedure of Example I to obtain a clear glass product. However, because of the high miscibility of the gelling agent, the gel exhibits improved homogeneity and the consolidated glass product exhibits improved transparency and complete freedom from seed defects.

While in the foregoing examples the stabilization of the suspension was accomplished by steric dispersion, the following example describes a suspension wherein no added stabilizing agent is present.

### Example III

A 120 g sample of a silica soot produced as described in Example I having a surface area of 86 m²/g and a particle size averaging about 0.03 microns, is added to 300 ml of 1-propanol in the milling jar of Example I and the mixture is ball-milled in the jar by rotation for 12 hours. The product is a stable suspension of fumed silica, although in this case no dispersant has been added.

A solution to be used as the gelling agent for this suspension is prepared as in Example I, except that 8 ml of 30% aqueous $NH_4OH$ is added to 95 ml $CH_3OH$ and 5 ml of $H_2O$ to provide the solution. This solution is then combined with the propanol-silica suspension in a ratio of 3 parts of the suspension to one part of the gelling agent by volume in the magnetic mixing chamber of Example I, and the mixture is dispensed into a square mould about 125 mm on a side to a depth of about 12 mm. Gelling of the mixture occurs within an interval of about 5 minutes.

The gelled mass is dried in the mould and the drying chamber described in Example I, with substantially complete evaporation of the vehicle occurring within 144 hours at room temperature, without any cracking of the cast plate. The dried mass is about 100 × 100 × 9 mm in size.

This dried mass can be sintered to a clear glass plate, if desired, by heating to a temperature of 1350°C in an inert atmosphere such as helium. Complete consolidation occurs within an interval of about 30 minutes. Shrinkage during firing is about 40% (linear).

## Example IV

The preparation of a product from a doped fused silica or other pure glass fumed oxide proceeds in a manner substantially analogous to that of Example I. A doped fused silica soot consisting essentially of 15% $GeO_2$ and 85% $SiO_2$ by weight is prepared using a flame oxidation procedure as in Example I. A reactant vapour stream is provided by bubbling oxygen at a rate of 1.55 slpm through a reservoir of $SiCl_4$ maintained at 36°C, and oxygen at a rate of 0.41 slpm through a reservoir of $GeCl_4$ maintained at 60°C. The $O_2$—$SiCl_4$ and $O_2$—$GeCl_4$ vapour streams are mixed and fed to the oxidation burner along with a flame feed consisting of 1.3 slpm of natural gas and 1.3 slpm of oxygen. The burner is also provided with outer shield oxygen at a rate of 1.8 slpm and inner shield oxygen at a rate of 0.8 slpm.

The soot resulting from the combustion of the burner gases under these conditions is collected in a tube as in Example I. It is then removed and heated to 800°C in air to remove absorbed $H_2O$ and HCl and stored for subsequent use. The product is a pure $GeO_2$—$SiO_2$ soot with a surface area of about 87.5 m²/g.

To prepare a suspension of this fumed oxide, a 60 g sample is heated to 400°C in air to desorb water, and then quickly mixed with 100 ml of chloroform containing 17.5 ml of added 1-decanol as a dispersing agent in a small high-speed blender.

A 60 ml sample of the suspension thus prepared is destabilized in an open beaker by adding 4 ml of a gelling agent solution thereto with magnetic stirring. The gelling agent solution consists of 1 ml $H_2O$ as the gelling agent, mixed with 79 ml $CH_3OH$.

The destabilized suspension thus provided is formed by casting into a cylindrical mould lined with plastic film where it gels within an interval of about 5 minutes. This casting is then permitted to dry in the open air. Substantially complete drying of the casting, with some cracking due to the speed of the drying process, is accomplished within an interval of 18 hours. The dried product is then sintered to a clear glass piece at 1400°C within 30 minutes.

## Example V

The preparation of a stable suspension of a crystalline fumed oxide material follows substantially the procedure employed for the amorphous or glassy materials described in the previous examples. A crystalline fumed titanium dioxide is prepared using the above-described flame hydrolysis burner fed with a reactant stream produced by bubbling nitrogen at a flow rate of 1 slpm through a reservoir of titanium iso-propoxide, $Ti(iOC_3H_7)_4$, being maintained at 170—180°C and then adding by-pass nitrogen to the bubbler flow to produce a total reactant stream flow of 1.5 slpm. Combustion of this stream is achieved by means of a gas-oxygen mixture consisting of 5.6 slpm of natural gas and 5.6 slpm of oxygen, the burner also being provided with inner shield oxygen at a flow rate of 2.8 slpm and outer shield oxygen at a flow rate of 2.8 slpm. The product is a pure $TiO_2$ soot having a surface area of about 14.3 m²/g.

To prepare a suspension of this oxide, a 60 g sample of the material which has first been heated to 400°C under vacuum for 1 hour and thereafter kept in a glove box is placed in a plastic mixing jar containing several plastic milling cylinders along with 150 ml of a chloroform vehicle and 8 ml of an oleic acid dispersant. This combination is milled in the jar overnight. The product of this process is a stable, fluid, colloidal suspension of pure $TiO_2$ in chloroform.

A gelling solution for this suspension is prepared by combining one part $H_2O$ by volume and one part trifluoroacetic acid by volume as gelling agents with 10 parts by volume of methanol. A 50 ml sample of the $TiO_2$ suspension is then shaken in a closed container with 5 ml of the gelling solution and the shaken mixture is cast into a square mould 50 mm on a side to a depth of about 4 mm. Gellation of the cast suspension is rapid and drying of the gelled suspension is permitted to occur over an interval of about 24 hours. Some cracking of the gel occurs on drying, presently attributed to the presence of air bubbles in the casting, but no granulation is observed, the product consisting of three large, crack-free sections of the original casting.

## Example VI

A useful technique for layer casting, e.g. to provide a succession of gelled layers on a stationary or moving substrate, is to provide the gelling agent as a gas which contacts the suspension as the layers are deposited. In a specific example of this technique, a stable suspension of $SiO_2$ is prepared by adding a 60 g sample of dry $SiO_2$ soot produced as described in Example I to a chloroform vehicle consisting of 110 ml of chloroform and 14.4 ml of 1-decanol, with jar milling as in Example I.

The $SiO_2$ suspension thus provided is fed into a rotating mould consisting of a plugged, horizontally positioned glass cylinder about 70 mm in diameter and 300 mm in length, the cylinder being rotated about the cylinder axis at about 160 rpm. The suspension feed line is a movable delivery tube inserted through one end plug which repeatedly traverses the length of the cylinder along the axis of rotation, depositing the suspension as a coating on the moving cylinder wall at a rate of about 48 ml/min.

The gelling agent for the suspension is gaseous $NH_3$ which is supplied through an opening in the opposite end plug at a rate of about 0.4 slpm. Casting is commenced after $NH_3$ has displaced most of the air within the cylinder. Under the conditions described, gelling of the flowing suspension is initiated even before the suspension reaches the cylinder wall, and successive layers of the rapidly gelling suspension can readily be deposited without disrupting the integrity of underlying layers. The gelling rate may be con-

trolled by diluting the NH$_3$ with an inert gas such as nitrogen if desired.

The above-described technique would have particular application if it were desired to provide a cylindrical member exhibiting a radial composition gradient. The composition of the suspension could be changed in continuous or stepwise fashion as the delivery tube traversed the cylinder, providing succeeding layers of preselected composition on the mould wall. Advantageously, there would be no need to heat the mould to expel the vehicle; rather the gelled casting could be dried as a unit after layer deposition had been completed.

The invention constitutes a substantial improvement over the so-called solution methods for forming silicate glasses wherein fluid compositions are gelled and the gelled intermediate dried over prolonged periods and sintered to produce microporous or non-porous glasses. Through the use of non-aqueous suspensions of particulate fumed oxides of the above-disclosed particle size, and the steps of destabilizing the suspension and forming it prior to gelation into a product of the desired configuration, crack-free drying of the product is considerably facilitated and relatively large, crack-free products can more quickly and easily be obtained.

**Claims**

1. A method for making a porous or non-porous glass or ceramic product which comprises the steps of:

(a) suspending a particulate oxide in a non-aqueous liquid vehicle to provide a first stable fluid suspension of oxide particles, said particles having an average diameter not exceeding about 0.5 microns;

(b) destabilizing the suspension by adding a gelling agent thereto, said agent being added in an amount at least effective to cause complete gelation of the suspension;

(c) prior to gelation, forming the destabilized suspension into a selected configuration, said configuration thereafter being maintained at least until gelation has occurred; and

(d) drying the gelled suspension by expelling the liquid vehicle therefrom to provide a microporous glass or ceramic product.

2. A method in accordance with claim 1, which comprises the further step, after drying, of heating the microporous product to a temperature at least sufficient to at least partially sinter the oxide particles.

3. A method in accordance with claim 2, wherein the microporous product is heated to a temperature at least sufficient to completely sinter the oxide particles into a non-porous glass or ceramic product.

4. A method in accordance with claim 1, 2 or 3, wherein the destabilized suspension is formed by casting.

5. A method in accordance with claim 4, wherein the casting is formed in a mould which is lined with a deformable polymeric sheet.

6. A method in accordance with any preceding claim, wherein the vehicle is n-propanol, or another water-miscible organic liquid, or chloroform, n-hexane, methylene chloride, or another hydrophobic organic liquid.

7. A method in accordance with claim 6, wherein the suspension comprises an added dispersing agent.

8. A method in accordance with claim 7, wherein the added dispersing agent stabilizes the suspension by steric hindrance.

9. A method in accordance with any preceding claim, wherein the oxide is a fumed oxide with an average particle diameter in the range of 0.01—0.1 microns.

10. A method in accordance with claim 9, wherein the fumed oxide is doped or undoped fused silica or another amorphous fumed oxide, or TiO$_2$, or another crystalline fumed oxide.

11. A method in accordance with any preceding claim, wherein the gelling agent comprises water, aqueous NH$_4$OH or another acidic or basic aqueous solution.

12. A method in accordance with claim 11, wherein the aqueous gelling agent is added to the suspension in combination with a vehicle-miscible liquid.

13. A method in accordance with any one of claims 1 to 10, wherein the gelling agent is a non-aqueous vehicle-miscible liquid.

14. A method in accordance with claim 13, wherein the gelling agent is an alkylamine selected from the group consisting of 1,3 diaminopropane and heptylamine.

15. A method in accordance with any preceding claim, wherein prior to forming, the first mentioned fluid suspension is mixed with at least one additional suspension containing a particulate oxide which differs in composition from the particulate oxide present in the first mentioned suspension, to provide a mixed suspension containing a mixture of oxides.

16. A method in accordance with claim 15, wherein mixing is accomplished before either the first suspension or the additional suspension has been destabilized.

17. A method in accordance with claim 15, wherein mixing is accomplished during or after at least one of said first suspension or additional suspension has been destabilized.

18. A method in accordance with any one of claims 15 to 17, wherein the mixed first and additional suspensions are formed by casting as an overlayer upon at least one underlying layer, the underlying layer consisting essentially of a gelled non-aqueous suspension containing a mixture of oxides.

19. A method in accordance with claim 18, wherein the mixture of oxides in the underlying layer differs in composition from the mixture of fumed oxides in the cast overlayer.

20. A method in accordance with claim 19, wherein the cast layers form an axial composition gradient in the selected configuration for the glass or ceramic product.

## Patentansprüche

1. Verfahren zur Herstellung eines porösen oder nicht porösen Glas- oder Keramikproduktes gekennzeichnet durch folgende Verfahrensschritte:

a) Suspendieren eines Oxidpartikels in einem nicht wässrigen Träger zur Schaffung einer ersten stabilen Flüssigsuspension von Partikeln, wobei die Partikel einen mittleren Durchmesser besitzen, der etwa 0,5 µm nicht übersteigt;

b) Destabilisieren der Suspension, indem zu dieser ein Geliermittel hinzugefügt wird, wobei das Mittel in einer Menge hinzugefügt wird, die wenigstens das Veranlassen der vollständigen Gelierung der Suspension bewirkt;

c) Vor dem Gelieren wird die destabilisierte Suspension in eine ausgewählte Konfiguration geformt, wobei die Konfiguration danach wenigstens solange beibehalten wird, bis die Gelierung eingetreten ist; und

d) Trocknen der gelierten Suspension durch Austreiben des flüssigen Trägers aus dieser, um ein mikroporöses Glas- oder Keramikprodukt zu schaffen.

2. Verfahren nach Anspruch 1, dadurch gekennzeichnet, daß nach dem Trocknen als weiterer Schritt das mikroporöse Produkt auf eine Temperatur erhitzt wird, die wenigstens ausreicht, um wenigstens teilweise die Oxidpartikel zu sintern.

3. Verfahren nach Anspruch 2, dadurch gekennzeichnet, daß das mikroporöse Produkt auf eine Temperatur erhitzt wird, die wenigstens ausreicht, um die Oxidpartikel in ein nicht poröses Glas- oder Keramikprodukt vollständig zu sintern.

4. Verfahren nach Anspruch 1, 2 oder 3, dadurch gekennzeichnet, daß die destabilisierte Suspension durch Guß geformt wird.

5. Verfahren nach Anspruch 4, dadurch gekennzeichnet, daß der Guß in einer Form geformt wird, die mit einer deformierbaren Polymerschicht beschichtet ist.

6. Verfahren nach einem der vorangehenden Ansprüche, dadurch gekennzeichnet, daß der Träger aus N-Propanol oder einer anderen wassermischbaren organischen Flüssigkeit oder Chloroform, N-Hexan, Methylenchlorid oder einer anderen hydrophoben organischen Flüssigkeit besteht.

7. Verfahren nach Anspruch 6, dadurch gekennzeichnet, daß die Suspension ein zugesetztes Dispergierungsmittel aufweist.

8. Verfahren nach Anspruch 7, dadurch gekennzeichnet, daß das zugesetzte Dispergierungsmittel die Suspension durch sterische Hinderung stabilisiert.

9. Verfahren nach einem vorangehenden Anspruch, dadurch gekennzeichnet, daß das Oxid ein verdampftes Oxid mit einem mittleren Partikeldurchmesser in dem Bereich von 0,01—0,1 µm ist.

10. Verfahren nach Anspruch 9, dadurch gekennzeichnet, daß das verdampfte Oxid aus dotiertem oder undotiertem geschmolzenem Silicium oder einem anderen amorphen verdampften Oxid oder TiO₂ oder einem anderen kristallinen verdampften Oxid besteht.

11. Verfahren nach einem vorangehenden Anspruch, dadurch gekennzeichnet, daß das Gelierungsmittel aus Wasser, wässrigem NH₄OH oder einer anderen sauren oder basischen wässrigen Lösung besteht.

12. Verfahren nach Anspruch 11, dadurch gekennzeichnet, daß das wässrige Geliermittel der Suspension in Verbindung mit einer mit dem Träger mischbaren Flüssigkeit zugesetzt wird.

13. Verfahren nach einem der Ansprüche 1—10, dadurch gekennzeichnet, daß das Geliermittel aus einer nicht wässrigen mit dem Träger mischbaren Flüssigkeit besteht.

14. Verfahren nach Anspruch 13, dadurch gekennzeichnet, daß das Geliermittel aus einem Alkylamin besteht, das aus der aus 1,3 Diaminpropan und Heptylamin bestehenden Gruppe ausgewählt ist.

15. Verfahren nach einem vorangehenden Anspruch, dadurch gekennzeichnet, daß vor dem Formen die zuerst erwähnte flüssige Suspension mit wenigstens einer zusätzlichen Suspension gemischt wird, welche ein Oxidpartikel enthält, das in seiner Zusammensetzung von dem in der zuerst erwähnten Suspension vorhandenem Oxidpartikel abweicht, um eine gemischte Suspension zu schaffen, die eine Mischung von Oxiden enthält.

16. Verfahren nach Anspruch 15, dadurch gekennzeichnet, daß das Mischen durchgeführt wird, bevor entweder die erste Suspension oder die zusätzliche Suspension destabilisiert worden ist.

17. Verfahren nach Anspruch 15, dadurch gekennzeichnet, daß das Mischen vorgenommen wird, während oder nachdem wenigstens eine der ersten Suspension oder die zusätzliche Suspension destabilisiert worden ist.

18. Verfahren gemäß einem dem Ansprüche 15—17, dadurch gekennzeichnet, daß die gemischten ersten und zusätzlichen Suspensionen geformt werden, indem sie als Überlagerung auf wenigstens eine darunterliegende Schicht gegossen werden, wobei die darunterliegende Schicht im wesentlichen aus einer gelierten nicht wässrigen Suspension besteht, die eine Mischung von Oxiden enthält.

19. Verfahren nach Anspruch 18, dadurch gekennzeichnet, daß die Mischung von Oxiden in der darunterliegenden Schicht sich in ihrer Zusammensetzung von der Mischung der verdampften Oxide in der gegossenen Überlagerung unterscheidet.

20. Verfahren nach Anspruch 19, dadurch gekennzeichnet, daß die gegossenen Schichten einen axialen Zusammensetzungsgradienten in der gewählten Konfiguration für das Glas- oder Keramikprodukt bilden.

## Revendications

1. Procédé pour la préparation d'un produit de verre ou de céramique poreux ou non poreux, caractérisé en ce qu'il comprend les opérations consistant:

(a) à mettre en suspension un oxyde particulaire dans un véhicule liquide non aqueux pour obtenir une première suspension fluide stable de particules d'oxyde, lesdites particules étant d'un diamètre moyen ne dépassant pas environ 0,5 micromètre;

(b) à destabiliser la suspension par addition à celle-ci d'un agent gélifiant, ledit agent étant ajouté en une proportion au moins efficace pour provoquer une gélification complète de la suspension;

(c) avant gélification, à façonner la suspension destabilisée à une configuration choisie, ladite configuration étant par la suite conservée au moins jusqu'à ce que la gélification ait eu lieu; et

(d) à sécher la suspension gélifiée en en expulsant le véhicule liquide pour obtenir un produit de verre ou de céramique microporeux.

2. Procédé selon la revendication 1, caractérisé en ce qu'il comprend l'opération additionnelle, après séchage, de chauffage du produit microporeux à une température au moins suffisante pour fritter au moins partiellement les particules d'oxyde.

3. Procédé selon la revendication 2, caractérisé en ce que le produit microporeux est chauffé à une température au moins suffisante pour fritter complètement les particules d'oxyde en un produit de verre ou de céramique non poreux.

4. Procédé selon la revendication 1, 2 ou 3, caractérisé en ce que la suspension destabilisée est façonnée par coulage.

5. Procédé selon la revendication 4, caractérisé en ce que la pièce coulée est formée dans un moule qui est garni d'une feuille polymère déformable.

6. Procédé selon l'une quelconque des revendications précédentes, caractérisé en ce que le véhicule est du n-propanol, ou un autre liquide organique miscible à l'eau, ou du chloroforme, du n-hexane, du chlorure de méthylène, ou un autre liquide organique hydrophobe.

7. Procédé selon la revendication 6, caractérisé en ce que la suspension comprend un agent dispersant ajouté.

8. Procédé selon la revendication 7, caractérisé en ce que l'agent dispersant ajouté stabilise la suspension par empêchement stérique.

9. Procédé selon l'une quelconque des revendications précédentes, caractérisé en ce que l'oxyde est un oxyde fumé à diamètre de particules moyen de 0,01 à 0,1 micromètre.

10. Procédé selon la revendication 9, caractérisé en ce que l'oxyde fumé est de la silice fondue dopée ou non dopée ou un autre oxyde fumé amorphe, ou du $TiO_2$, ou un autre oxyde fumé cristallin.

11. Procédé selon l'une quelconque des revendications précédentes, caractérisé en ce que l'agent gélifiant comprend l'eau, $NH_4OH$ aqueux ou une autre solution aqueuse acide ou basique.

12. Procédé selon la revendication 11, caractérisé en ce que l'agent gélifiant aqueux est ajouté à la suspension en combinaison avec un liquide miscible au véhicule.

13. Procédé selon l'une quelconque des revendications 1 à 10, caractérisé en ce que l'agent gélifiant est un liquide non aqueux miscible au véhicule.

14. Procédé selon la revendication 13, caractérisé en ce que l'agent gélifiant est une alkylamine choisie dans le groupe formé par le 1,3-diaminopropane et l'heptylamine.

15. Procédé selon l'une quelconque des revendications précédentes, caractérisé en ce qu'avant façonnage, la suspension fluide mentionnée en premier lieu est melangée à au moins une suspension additionnelle contenant un oxyde particulaire dont la composition diffère de celle de l'oxyde particulaire présent dans la suspension mentionnée en premier lieu, pour fournir une suspension mixte contenant un mélange d'oxydes.

16. Procédé selon la revendication 15, caractérisé en ce que le mélange est effectué avant destabilisation soit de la première suspension, soit de la suspension additionnelle.

17. Procédé selon la revendication 15, caractérisé en ce que le mélange est effectué pendant ou après destabilisation de l'une au moins d'entre ladite première suspension et ladite suspension additionnelle.

18. Procédé selon l'une quelconque des revendications 15 à 17, caractérisé en ce que la première suspension et la suspension additionnelle mélangées sont façonnées par coulage sous forme de surcouche par-dessus au moins une couche sous-jacente, la couche sous-jacente étant essentiellement formée d'une suspension non aqueuse gélifiée contenant un mélange d'oxydes.

19. Procédé selon la revendication 18, caractérisé en ce que le mélange d'oxydes présent dans la couche sous-jacante est de composition différant de celle du mélange d'oxydes fumés que contient la surcouche coulée.

20. Procédé selon la revendication 19, caractérisé en ce que les couches coulées forment un gradient de composition axial dans la configuration choisie pour le produit de verre ou de céramique.

*Fig. 1*

Fig. 2